# EUROPÄISCHE PATENTSCHRIFT

(11) **EP 1 491 120 B1**
(45) Veröffentlichungstag und Bekanntmachung des Hinweises auf die Patenterteilung: **26.04.2006**
(21) Anmeldenummer: 04009632.3
(22) Anmeldetag: 23.04.2004
(51) Int. Cl.: A47J 31/44, A47J 31/46

(54) **Dampfandockeinheit einer Espressomaschine**
Coupling unit of an espresso machine
Ensemble d'accouplage d'une cafetière à espresso

(30) Priorität: 23.06.2003 DE 20309691 U
(43) Veröffentlichungstag der Anmeldung: 29.12.2004
(73) Patentinhaber: Eugster/Frismag AG, 8590 Romanshorn (CH)
(72) Erfinder: Fischer, Daniel, 8590 Romanshorn (CH)
(74) Vertreter: Schubert, Siegmar

(56) Entgegenhaltungen:
- EP-A- 0 307 497
- IT-B- 1 236 535
- US-A1- 2003 051 603

## Beschreibung

Die Erfindung betrifft die Dampfandockeinheit einer Espressomaschine nach dem Oberbegriff des Anspruchs 1.

Derartige bekannte Dampfandockeinheiten sind ergänzender Bestandteil von Kaffeemaschinen, insbesondere Espressomaschinen, um diese mit einer Milchaufschäumkanne dampfleitend und zu der Umgebung abgedichtet zu verbinden. In der Milchaufschäumkanne befinden sich alle mechanischen Elemente, die zur Erzeugung von Mitchschaum erforderlich sind, sowie die Milch. Der zum Aufschäumen notwendige Dampf wird der Milchaufschäumkanne über die Dampfandockeinheit zugeführt. Die Verwendung einer solchen Milchaufschäumkanne hat unter anderem den Vorteil, daß beim Aufschäumen kein Dampf oder aufzuschäumende eventuell spritzende Milch in die Umgebung entlassen werden, insbesondere dann, wenn statt einer geschlossenen Milchaufschäumkanne ein offenes Gefäß verwendet wird, in dem ein Dampfrohr nicht genügend in die aufzuschäumende Flüssigkeit eintaucht oder nicht genügend Flüssigkeit enthalten ist. - Die vorliegende Erfindung bezieht sich zwar insbesondere auf Milchaufschäumkannen, es können aber auch andere Gefäße zum Beaufschlagen in ihnen enthaltener flüssiger Nahrungsmittel mit Dampf benutzt werden.

Um eine Flüssigkeit wie Milch in einem geschlossenen Behälter mit Dampf zu beaufschlagen, der in einer Kaffeemaschine der Espressobauart erzeugt wird, gehört eine Dampfandockeinheit gemäß dem Oberbegriff des Anspruchs 1 bereits zum Stand der Technik (WO 01/26520). Diese Dampfandockeinheit soll einfach zu benutzen und zu warten sein und ein unerwünschtes Spritzen von Flüssigkeit bei der Dampfbehandlung vermeiden. Hierzu weist die bekannte Dampfandockeinheit einen Dampfeinlaß auf, der über ein Ventil, welches einen zylindrischen Schieber in einem zylindrischen Körper umfaßt, mit einem Dampfauslaß verbunden werden kann, der auf einer Dampfeinlaßöffnung einer Schäumkanne zur Anlage gebracht wird und dabei gegenüber der Umgebung mit einer ringförmigen Dichtung selbsttätig abgedichtet wird. Das Ventil mit seinem zylindrischen Körper ist durch einen Steuerhebel, der schwenkbar gelagert ist, anhebbar und absenkbar. Der Steuerhebel wird durch Einschieben der Dampfaufschäumkanne in ihre Dampfaufnahmeposition an der Espressomaschine zwangsweise betätigt. Bei entnommener Dampfaufschäumkanne ist das Ventil mit dem zylindrischen Schieber nach oben geschwenkt, wobei das Ventil geschlossen ist, welches somit eine Dampfabgabe an den Dampfauslaß unterbindet. Der Steuerhebel weist einen Arm auf, mit dem er einen Schaltkontakt betätigt, um die Dampferzeugung der Kaffeemaschine in seiner Arbeitsstellung zu aktivieren, wenn er an der Milchaufschäumkanne anliegt, oder abzuschalten, wenn der Steuerhebel von der Milchaufschäumkanne frei ist

Wenngleich durch diese Dampfandockeinheit eine Dampfabgabe unterbunden sein soll, wenn sich der Steuerhebel in seiner Ruheposition befindet, kann es zu einem unerwünschten Entspannen und Entlassen von Restdampf in die unmittelbare Umgebung der Dampfeinlaßöffnung bei Entnahme der Milchaufschäumkanne aus der Dampfandockeinheit kommen, insbesondere dann, wenn die sich an das Ventil stromabwärts anschließende Dampfaustaßleitung verhältnismäßig großvolumig ist.

Der vorliegenden Erfindung liegt daher die Aufgabe zugrunde, ein für die Bedienungsperson unerwünschtes Entspannen und Entlassen von Restdampf aus der unmittelbaren Umgebung des Dampfauslasses und der Dampfeinlaßöffnung der Schäumkanne zu vermeiden, wenn die Milchaufschäumkanne aus der Dampfandockeinheit entnommen wird und dadurch die Verbindung zwischen der Dampfandockeinheit und der Milchaufschäumkanne gelöst wird. Diese Sicherheitsfunktion soll die Handhabung der Milchaufschäumkanne zum Aufschäumen möglichst nicht erschweren und konstruktiv möglichst unkompliziert sein.

Diese Aufgabe wird durch die Ausbildung der Dampfandockeinheit mit den kennzeichnenden Merkmalen des Anspruchs 1 gelöst.

Wesentlich ist somit bei der erfindungsgemäßen Lösung, daß der Restdampf über eine Dampfentspannungsleitung aus dem unmittelbaren Bereich des Dampfauslasses der Dampfandockeinheit zu einer Stelle herausgeführt wird, an der insbesondere eine Auffangschale angeordnet ist und die für die Bedienungsperson gefahrlos ist. Hierzu dienen auch das Ventil, mit dem die Dampfentspannung bzw. das Entlassen des Restdampfes aus dem Auslaßvolumen der Dampfandockeinheit durchgeführt wird, sowie eine Steuerung dieses Ventils und eines Schaltkontakts des Dampferzeugers, die selbsttätig sicherstellt, daß die Dampferzeugung abgeschaltet ist, bevor die Dampfentspannungsleitung mit dem Dampfauslaß über das Ventil verbunden ist, und dies, bevor die Milchaufschäumkanne von der Dampfandockeinheit entfernt wird und somit die dampfleitende Verbindung zwischen der Dampfandockeinheit und einer Dampfeinlaßöffnung der Milchaufschäumkanne freiliegt. Andererseits soll mit der Steuerung gewährleistet sein, daß in einer Arbeitsposition eines Betätigungshebels, mit dem die Steuerung durchgeführt wird, die Dampfentspannungsleitung durch das Ventil verschlossen ist, bevor der Dampferzeuger aktiviert wird und der Dampf bestimmungsgemäß in die Milchaufschäumkanne aus dem Dampfauslaß der Dampfandockeinheit eingeleitet wird.

Besonders vorteilhafte Merkmale der Realisierung dieses Prinzips der gezielten Dampfentspannung und Restdampfableitung sind in den Ansprüchen 2-8 sowie in der nachfolgenden Beschreibung gegeben.

In der Ruheposition des Betätigungshebels verbindet das Ventil die Dampfentspannungsleitung nicht nur mit dem Dampfauslaß, sondern auch mit dem Dampfeinlaß, der in diesem Zustand nicht durch den Dampferzeuger mit Dampf beaufschlagt wird, so daß Restdampf auch aus dem Dampfeinlaß in die Dampfentspannungsleitung entlassen wird. Ein Ventil, welches den Dampfeinlaß zu dem Dampfauslaß unterbricht, ist somit nicht erforderlich. Es wird mit Sicherheit vermieden, daß der Dampfauslaß unter Betriebsdampfdruck von der Milchaufschäumkanne getrennt wird, was zu einem die Bedienungsperson gefährdenden Dampfentspannungsvorgang in unmittelbarer Umgebung des Dampfauslasses führen würde.

In einer besonders vorteilhaften Konstruktion nach Anspruch 2 ist das Dampfauslaßrohr Bestandteil eines in einer Zylinderhülse absenkbaren und anhebbaren Dampfzuführzylinders, wobei der Dampfzuführzylinder mittels des Betätigungshebels entgegen der Kraft einer Rückstellfeder in seine Dampfzuführposition absenkbar ist, in der er mit einer Ver-/Entriegelungseinrichtung verriegelbar ist, wobei die Ver-/Entriegelungseinrichtung mit dem Betätigungshebel zum selbsttätigen Anheben des Dampfzuführzylinders unter der Kraft der Rückstellfeder in die Ruheposition entriegelbar ist, nachdem mit dem Betätigungshebel der Schaltkontakt betätigt ist, der damit die Dampferzeugung abschaltet, und nachdem mit dem Betätigungshebel das Ventil zu der Dampfentspannungsleitung geöffnet ist.

Mit dieser wenige bewegliche Teile umfassenden Konstruktion wird erreicht, daß das Dampfauslaßrohr in einer geradlinigen Bewegung mit , seinem Auslaßabschnitt in die Dampfeinlaßöffnung der Milchaufschäurrikanne eingeschoben werden kann, um eine besonders zuverlässige Verbindung und nicht nur eine aufliegende Verbindung des Dampfauslasses herzustellen. Geschwenkt und nicht mit einer linearen Bewegung verstellt werden im wesentlichen nur der Betätigungshebel sowie vorzugsweise gemäß Anspruch 6 ein drehbares Keramikventil als Ventil, dessen Drehachse achsgleich mit der Schwenkachse des Betätigungshebels angeordnet ist.

Eine in Verbindung mit dem in der Zylinderhülse absenkbaren und anhebbaren Dampfzuführzylinder besonders zweckmäßige Ver-/Entriegelungseinrichtung zeichnet sich gemäß Anspruch 3 aus durch einen Verriegelungszapfen, der in einem Verriegelungszapfenaufnahmeloch in dem Dampfzuführzylinder unter Druck einer Verriegelungszapfenfeder steht, durch den er in einer Verriegelungszapfenfalle in der Zylinderhülse verschiebbar ist, sowie durch einen an der Zylinderhülse gelagerten Verriegelungshebel, der in die Verriegelungsfalle eingreift und der mittels des Betätigungshebels schwenkbar ist, wobei er den Verriegelungszapfen aus der Verriegelungszapfenfalle drückt. - Dadurch wird eine besonders zuverlässige Einstellung der Arbeitsposition und der Ruheposition des Betätigungshebels erreicht, ohne daß dieser in der Arbeitsposition an der Milchaufschäumkanne anliegen muß, wobei Positionsabweichungen der Milchaufschäumkanne am Aufstellort bei nachlässiger Handhabung sowie Abweichungen von der Sollform der Milchaufschäumkanne eine exakte Betätigung des Betätigungshebels stören könnten. Vielmehr kann der Betätigungshebel einfach manuell in seine Arbeitsposition geschwenkt werden. Wenn dementsprechend der Dampfzuführzylinder mit dem Dampfauslaß mitbewegt wird und seine Dampfzuführposition erreicht, wird er in dieser selbsttätig durch die Ver-/Entriegelungseinrichtung gehalten. Erst wenn der Betätigungshebel zu seiner Ruheposition zurückgeführt wird, entriegelt er die Ver-/Entriegelungseinrichtung zwangsläufig in der richtigen Rückführphase, wobei der Verriegelungszapfen aus der Verriegelungszapfenfalle gedrückt wird. Der Dampfzuführzylinder wird unter der Wirkung der Rückstellfeder in die Ruhestellung zurückbewegt.

Damit der Betätigungshebel zum Absenken des Dampfzuführzylinders in seiner Dampfzuführposition mit diesem kraftschlüssig verbunden ist, nicht aber zum Zurückführen in die Ruheposition, um bei zunächst unveränderter Lage des Dampfzuführzytinders den Dampferzeuger mittels des Schaltkontakts abzuschalten und den Dampfeinlaß und den Dampfauslaß über das Ventil mit der Dampfentspannungsleitung zu verbinden, ist die Ver-/Entriegelungseinrichtung gemäß Anspruch 4 ausgebildet und der Betätigungshebel liegt nach Anspruch 5 an einem Mitnahmeklotz des Dampfzuführzylinders einseitig an.

Weiterhin ist zur Durchführung der oben genannten Funktionen des Einschaltens und Abschaltens des Dampferzeugers ein Betätigungselement des Schaltkontakts in einer Bewegungsbahn des Betätigungshebels angeordnet.

Um in der Arbeitsposition das Dampfauslaßrohr an seinem Auslaßende sicher gegenüber der Umgebung abzudichten, ist das Dampfauslaßrohr von einer Dichtungsmanschette umgeben, die sich beim Absenken des Dampfzuführzylinders um die Dampfeinlaßöffnung der Milchaufschäumkanne drückt. Indem ein Stück des Auslaßendes in die Milchaufschäumkanne eingeführt wird, schiebt sich dabei die Dichtungsmanschette zurück und zusammen, um eine zuverlässige Abdichtwirkung auch bei Abmessungstoleranzen der Dampfandockeinheit und der Milchaufschäumkanne zu erreichen.

Ein Ausführungsbeispiel wird im folgenden anhand einer Zeichnung mit drei Figuren erläutert, in denen zeigen:
- Figur 1: einen Längsschnitt durch eine Dampfandockeinheit in Ruheposition mit abgebrochen dargestelltem oberen Teil einer Milchaufschäumkanne,
- Figur 2: die Dampfandockeinheit gemäß Figur 1, ebenfalls in einem Längsschnitt, jedoch in Arbeitsposition bzw. Dampfzuführposition, in der die Dampfandockeinheit mit der Milchaufschäumkanne dampfleitend verbunden ist,
- Figur 3a: eine Einzelheit der Dampfandockeinheit, nämlich ein Keramikventil in einer Ruheposition, und
- Figur 3b: das Keramikventil in einer Arbeitsposition.

Eine nur in ihrem oberen Teil dargestellte Milchaufschäumkanne 1 umfaßt eine Dampfeinlaßöffnung 2 in Form einer Bohrung, die zu einer Saugkammer 3 zum Milchaufschäumen führt. Hierzu steht die Saugkammer mit einer in die Nähe des Bodens der Milchaufschäumkanne führenden Milchleitung 4 in Verbindung. Ein in der Saugkammer unter Zufuhr von Luft gebildetes Milch-Dampf-Luftgemisch, welches schaumförmig ist, wird über eine kammerförmige Erweiterung 5 nach unten abgeführt, wobei die Strömungsgeschwindigkeit herabgesetzt wird.

Um die Milchaufschäumkanne 1 mit Dampf zu versorgen, wird eine nicht dargestellte Espressomaschine mit einem Dampferzeuger verwendet, der mit einer Dampfandockeinheit in Verbindung steht, die Bestand der Espressomaschine sein kann.

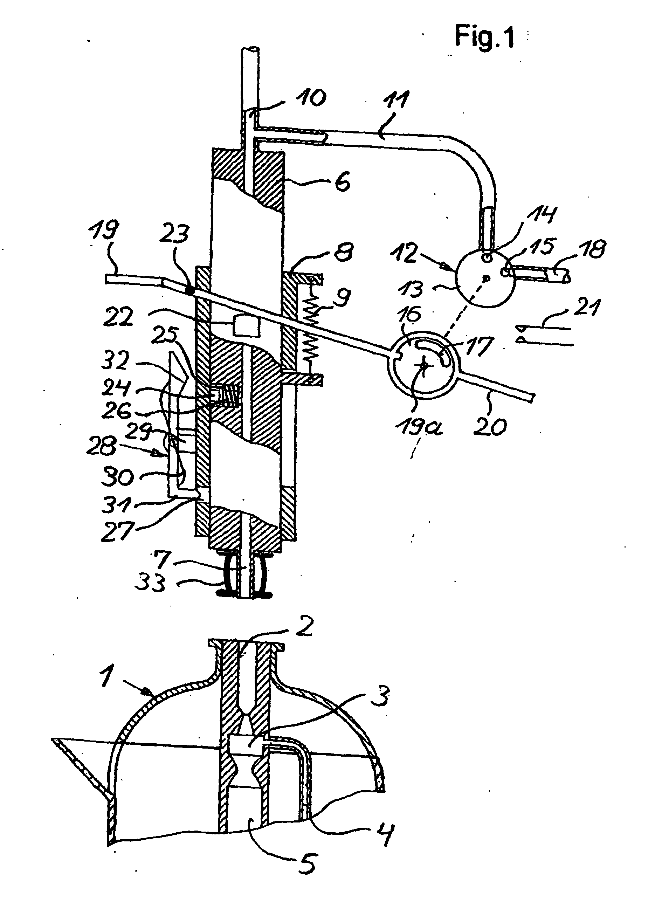

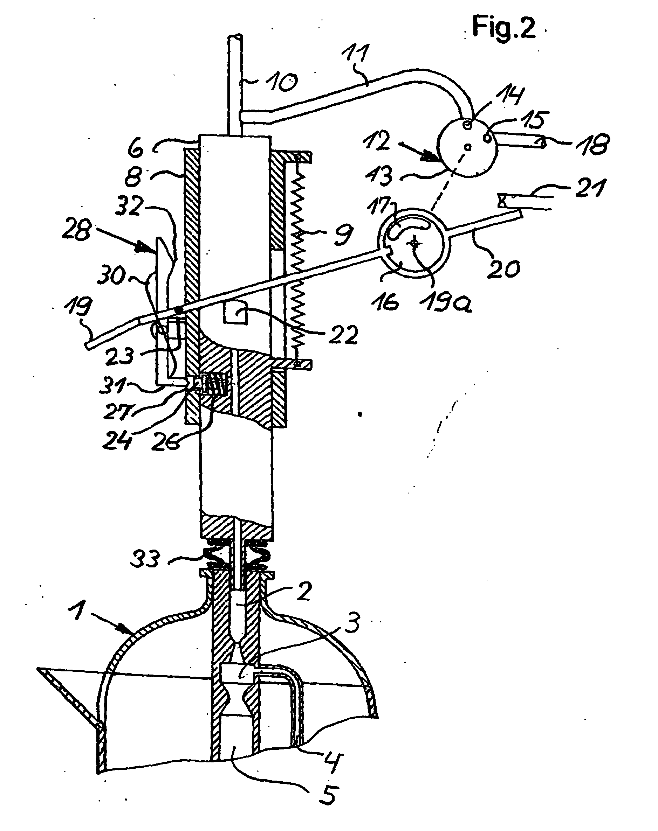

Die Dampfandockeinheit umfaßt einen Dampfzuführzylinder 6 mit einem sich in dessen Längsrichtung erstreckenden Dampfauslaßrohr, dessen unterer Abschnitt einen Dampfauslaß 7 bildet. Der Dampfzuführzytinder 6 ist in einer Zylinderhülse 8 verschiebbar und wird durch eine Rückstellfeder 9 normalerweise in der in Figur 1 dargestellten angehobenen Ruheposition gehalten. Der untere Abschnitt des Dampfauslaßrohrs 7 als Dampfauslaß ist zum dampfdichten Verbinden mit der Dampfeintaßöffnung 2 der Milchaufschäumkanne von einer axial flexiblen Dichtungsmanschette 33 umgeben, die sich beim Absenken des Dampfzuführzylinders 6 um die Dampfeinlaßöffnung 2 der Milchaufschäumkanne 1 legt, siehe Figur 2. In der in Figur 2 dargestellten Dampfzuführposition des Dampfzuführzylinders 8 ragt der untere Abschnitt des Dampfauslaßrohrs als Dampfauslaß 7 in die Dampfeinlaßöffnung 2 der Milchaufschäumkanne 1 hinein, wie in Figur 2 dargestellt.

Das seinem unteren Abschnitt entgegengesetzte obere Ende des Dampfauslaßrohrs 7 ist mit einem Dampfeinlaß 10 in Form einer flexiblen Dampfzuführleitung 11 versehen. Von der Dampfzuführleitung 10 zweigt eine ebenfalls flexible Dampfableitung 11 ab, die zu einem als drehbares Keramikventil ausgebildeten, allgemein mit 12 bezeichneten Ventil führt.

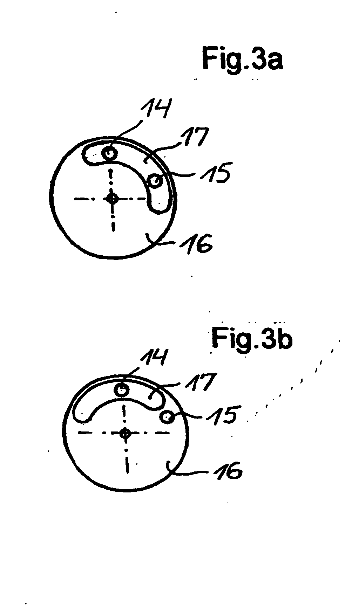

Das Keramikventil 12 umfaßt eine ortsfeste Keramikventilscheibe 13 mit einem Dampfableitungs-Eingangsloch 14 sowie einem DampfableitungsAusgangsloch 15. Mit der ortsfesten Keramikventilscheibe 13 wirkt eine drehbare Keramikventilscheibe 16 zusammen, die einen Verbindungskanal 17 aufweist: Dieser ist so angeordnet und bemessen, daß er je nach Drehstellung der drehbaren Keramikventilscheibe 16 das Dampfableiteingangsloch 14 mit dem Dampfableitausgangsloch 15 verbinden kann, siehe Figur 3a, wodurch eine Verbindung zwischen der flexiblen Dampfableitung 11 und einer Dampfentspannungsleitung 18 an dem Dampfableitungsausgangsloch 15 geschaffen werden kann. Die Dampfentspannungsleitung 18 führt zu einer nicht dargestellten Auffangschale außerhalb des Bedienungsbereichs.

In der in Figur 3b gezeigten Drehstellung der drehbaren Keramikventilscheibe 16, die der Dampfzuführposition des Dampfzuführzylinders 6 entspricht, stellt hingegen der Verbindungskanal 17 keine Verbindung zu dem Dampfableitungsausgangsloch 15 her.

Das Ventil 12 ist durch einen Betätigungshebel 19 drehbar einsteltbar, wozu der Betätigungshebel 19 mit der drehbaren Keramikventilscheibe 16 verbunden ist. Die Drehachse 19a dieser Keramikventilscheibe 16, also die Drehachse des Keramikventils 12, bildet gleichzeitig die Schwenkachse des Betätigungshebels 19.

Ein Betätigungshebelarm 20 des Betätigungshebels dient zur Betätigung eines Schaltkontakts 21, der in nicht dargestellter Weise mit dem Dampferzeuger der Espressomaschine, insbesondere einer Dampfpumpe verbunden ist. Zwischen dem Betätigungsarmhebel 20 und dem Schaltkontakt 21 kann ein nicht dargestelltes Betätigungselement angeordnet sein, so daß der Schaltkontakt 21 über dieses betätigt wird.

Der Betätigungshebel 19 liegt weiterhin an einem Mitnahmeklotz 22 des Dampfzuführzylinders 6 an und kann diesen über den Mitnahmektotz 22 aus der in Figur 1 dargestellten Ruheposition in die in Figur 2 gezeigte Dampfzuführposition herunterdrücken.

Weiterhin weist der Betätigungshebel 19 einen Mitnahmebolzen 23 auf, der Bestandteil einer Ent-/Verriegelungseinrichtung des Dampfzuführzylinders 6 in der Zylinderhülse 8 ist:

Zu dem Verriegelungsteil der Ver-/Entriegelungseinrichung gehört ein Verriegelungszapfen 24, der quer zur Hauptachse des Dampfzuführzylinders 6, also radial, in einem Verriegelungszapfenaufnahmeloch 25 verschiebbar gelagert ist und unter dem Druck einer Verriegelungszapfenfeder 26 steht, die den Verriegelungszapfen 24 radial nach außen zu der Zylinderhülse 8 drückt. Diese weist eine ebenfalls radial orientierte Verriegelungszapfenfalle 27 an einer Stelle auf, in der der Verriegelungszapfen 24 in Dampfzuführstellung des Dampfzuführzylinders in die Verriegelungszapfenfalle 27 eingreifen kann, siehe Figur 2.

Wesentliches Element des Entriegelungsteils der Ver-/Entriegelungseinrichtung ist ein zweiarmiger Entriegelungshebel 28, der an einem Entriegelungshebelträger 29 zu der Zylinderhülse 8 schwenkbar gelagert ist. Der Entriegelungshebel 28 steht unter der Wirkung einer Entriegelungshebelrücksteilfeder 30, so daß ein erster, in der Zeichnung unterer Arm, der in einer Entriegelungshebelnase 31 endet, von der Zylinderhülse 8 weggedrückt wird, wodurch die Entriegelungshebelnase 31 von dem Innern der Verbindungszapfenfalle 27 weggeschwenkt wird, so daß er in der Dampfzuführstellung des Dampfzuführzylinders, wenn sich der Verriegelungszapfen 24 in der Verriegelungszapfenfalle 27 befindet, nicht gegen den Verriegelungszapfen 24 drückt, siehe Figur 2. An seinem entgegengesetzten zweiten, in der Zeichnung oberen Hebelarm ist an dem Entriegelungshebel 28 eine Auflaufkurve 32 ausgeformt, an welcher der Mitnahmebolzen 23 auflaufen kann, wenn der Betätigungshebel 19 aus der in Figur 2 dargestellten Arbeitsposition in Dampfzuführposition des Dampfzuführzylinders 6 nach oben in seine Ruheposition geschwenkt wird, wodurch die Entriegelungshebelnase 31 gegen den Verriegelungszapfen drückt und diesen entgegen der Kraft der Verriegelungszapfenfeder 26 aus der Verriegelungszapfenfalle 27 bewegt.

Es sei bemerkt, daß der Ruheposition des Betätigungshebels 19 eine Ruheposition des Dampfzuführzylinders 6 entspricht, siehe Figur 1, daß jedoch eine Dampfzuführposition des Dampfzuführzylinders 6 noch beibehalten sein kann, wenn der Betätigungshebel 19 aus seiner unteren, der Ruhestellung entgegengesetzten Arbeitsstellung, siehe. Figur 2, in Richtung auf die Ruhestellung geschwenkt wird. Die untere Position des Dampfzuführzylinders wird als Dampfzuführposition bezeichnet.

Die dargestellte Dampfandockeinheit funktioniert folgendermaßen:

Um den zum Aufschäumen notwendigen Dampf der Milchaufschäumkanne 1 über die Dampfandockeinheit zuzuführen, wird der Dampfzuführzylinder 6 mit dem Dampfeinlaß 2 in Form der flexiblen Dampfzuführleitung und der flexiblen Dampfableitung 11 mittels des Betätigungshebels 19, der an dem Mitnahmeklotz 22 des Dampfzuführzylinders 6 anliegt, von Hand aus der in Figur 1 gezeigten Ruheposition in den in Figur 2 dargestellten Dampfzuführposition innerhalb der Zylinderhülse 8 verschoben. Der Betätigungshebel 19 dreht sich dabei um seine Schwenkachse und damit zugleich um die Drehachse 19a der achsgleich gelagerten drehbaren Keramikventilscheibe 16. Diese wird dadurch aus einer offenen Ruheposition gemäß Figuren 1 und 3a in eine geschlossene Arbeitsposition gemäß Figuren 2 und 3b gedreht. In der Ruheposition ist die Dampfableitung 11 über das Dampfableitloch 14 der ortsfesten Keramikventilscheibe 13 über den Verbindungskanal 17 der drehbaren Keramikventilscheibe 16 und das Dampfableitausgangsloch 15 der ortsfesten Keramikventilscheibe 13 mit der Dampfentspannungsleitung 18 verbunden. - Hingegen ist in der Arbeitsposition in Figur 2 die Verbindung zwischen der flexiblen Dampfableitung 11 mit der Dampfentspannungsleitung 18 innerhalb des Ventils 12 unterbrochen, da der Verbindungskanal 17 der drehbaren Keramikventilscheibe 16 nicht mehr das Dampfableitungsausgangsioch 15 der ortsfesten Keramikventilscheibe überdeckt. Über die Dampfentspannungsleitung 18 wird der in dem System mit dem Dampfeinlaß 10 und dem Dampfauslaß 7 enthaltene Dampf entspannt und in eine nicht dargestellte Auffangschale abgeleitet. Während der dazu erforderlichen Verstellbewegung des Betätigungshebels 19 unterläuft der Mitnahmebolzen 23 des Betätigungshebels 19 die Auflaufkurve 32 des Entriegelungshebels 28 ohne Wirkung auf die Verriegelung mit dem Verriegelungszapfen 24. Außerdem fährt der untere Abschnitt des Dampfauslaßrohrs, welcher den Dampfauslaß 7 bildet, in die Dampfeinlaßöffnung 2 der Milchaufschäumkanne 1 ein, wobei mittels der Dichtungsmanschette 33 der Dampfzuführzylinder 6 dampfdicht mit der Aufschäumkanne 1 verbunden ist. Kurz vor Erreichen dieser Dampfzuführposition des Dampfzuführzylinders 6, der in Figur 2 gezeigt ist, schließt der Betätigungshebelarm 20 des Betätigungshebels 19 den Schaltkontakt 21 des Dampferzeugers. Am Ende der Verstellbewegung des Betätigungshebels 19 rastet der Verriegelungszapfen 24 des Dampfzuführzylinders 6, der im Verriegelungszapfenaufnahmeloch 25 liegt, mittels der Verriegelungszapfenfeder 26 in die Verriegelungszapfenfalle 24 der Zylinderhülse 8 ein und fixiert den Dampfzuführzylinder 6 in seiner in Figur 2 dargestellten Dampfzuführposition.

Nach Beendigung des Aufschäumvorgangs wird direkt von Hand der Betätigungshebel 19 aus seiner Arbeitsposition in Figur 2 in Richtung seiner Ruheposition in Figur 1 gedrückt, d.h. hochgeschwenkt. Dabei wird bereits nach einem kleinen Weg der Schaltkontakt 21 des Dampferzeugers, insbesondere dessen Dampfpumpe, geöffnet und die Dampferzeugung somit gestoppt. Gleichzeitig überstreicht der Verbindungskanal 17 der drehbaren Keramikventilscheibe 16, der während der Arbeitsstellung über dem Dampfableiteingangsloch 14 und kurz vor dem Dampfableitausgangsloch 15 der ortsfesten Keramikventilscheibe 13 steht, das Dampfableitausgangsloch 15. Damit wird der noch im System mit dem Dampfauslaß 7 und dem Dampfeinlaß 10 befindliche Dampf entspannt und strömt über die Strecke 11-14-17-15-18 in die Auffangschale ab. Erst nach diesem Entspannungsvorgang erreicht der Mitnahmebolzen 23 des Betätigungshebels 19 die Auflaufkurve 32 des Entriegelungshebels 28 und schwenkt diesen entgegen der Rückstellkraft seiner Entriegelungshebelfeder 30 aus seiner Ruheposition um seinen nicht bezeichneten Drehpunkt, bis seine Entriegelungshebeinase 31 den Verriegelungszapfen 24 aus der Verriegelungsfalle 27 drückt. Damit ist der Dampfzuführzylinder 6 freigegeben, der mittels der Rückstellfeder 9 wieder in seine Ruheposition in Figur 1 selbsttätig zurückgleitet. Erst durch diesen Rückführungsvorgang wird auch der Dampfauslaß 7, der mit dem unteren Abschnitt des Dampfauslaßrohrs verkörpert ist, aus der Milchaufschäumkanne 1 gezogen.

Damit wird also zuverlässig und selbsttätig vermieden, daß der untere Abschnitt des Dampfauslaßrohrs, der den Dampfauslaß 7 bildet, unter Dampfdruck aus der Milchaufschäumkanne 1 gezogen wird und zu einem die Umgebung belastenden, eventuell sogar gefährdenden Entspannungsvorgang führt.

In der Zeichnung des Ausführungsbeispiels wurden die Elemente der Dampfandockeinheit im wesentlichen als in einer Ebene liegend dargstellt. Aus konstruktiven Gründen können die Elemente aber auch um die Hochachse der Damptandockeinheit versetzt angeordnet sein.

### Bezugszeichenliste

### Dampfandockeinheit

- 1: Milchaufschäumkanne
- 2: Dampfeinlaßöffnung der Milchaufschäumkanne
- 3: Saugkammer
- 4: Milchleitung
- 5: kammerförmige Erweiterung
- 6: Dampfzuführzylinder
- 7: Dampfauslaß
- 8: Zylinderhülse
- 9: Rückstellfeder des Dampfzuführzylinders
- 10: Dampfeinlaß
- 11: flexible Dampfableitung
- 12: Ventil
- 13: ortsfeste Keramikventilscheibe
- 14: Dampfabteit-Eingangsloch
- 15: Dampfableit-Ausgangsloch
- 16: drehbare Keramikventilscheibe
- 17: Verbindungskanal
- 18: Dampfentspannungsleitung
- 19: Betätigungshebel
- 19a: Keramikventil-Drehachse
- 20: Betätigungshebelarm
- 21: Schaltkontakt
- 22: Mitnahmeklotz
- 23: Mitnahmebolzen
- 24: Verriegelungszapfen
- 25: Verriegelungszapfen-Aufnahmeloch
- 26: Verriegelungszapfen-Feder
- 27: Verriegelungszapfenfalle
- 28: Entriegelungshebel
- 29: Entriegelungshebel-Träger
- 30: Entriegelungshebel-Rückstellfeder
- 31: Entriegelungshebel-Nase
- 32: Auflaufkurve
- 33: Dichtungsmanschette

## Patentansprüche

1. Dampfandockeinheit einer Espressomaschine, die mit einer Milchaufschäumkanne (1) verbindbar ist, wobei die Dampfandockeinheit einen Dampfeinlaß (10), einen Dampfauslaß (7), der mittels eines aus einer Ruheposition in eine Arbeitsposition schwenkbaren Betätigungshebels (19) an eine Dampfeinlaßöffnung (2) einer Milchaufschäumkanne (1) andrückbar ist, ein mit dem Dampfeinlaß (10) und dem Dampfauslaß (7) in Verbindung stehendes Ventil (12), welches durch den Betätigungshebel (19) betätigbar ist, sowie einen Schaltkontakt (21), der ebenfalls durch den Betätigungshebel (19) betätigbar ist und in Arbeitsposition des Betätigungshebels einen Dampferzeuger in der Espressomaschine aktiviert, umfaßt,
**gekennzeichnet durch**
- eine Dampfentspannungsleitung (18), die über das Ventil (12) mit dem Dampfeinlaß (10) sowie dem Dampfauslaß (7) betriebszustandsabhängig verbindbar ist,
- und eine Steuerung des Ventils (12) mittels des Betätigungshebels (19),
so daß das Ventil (12) bei Verstellen des Betätigungshebels (19) aus seiner Ruheposition in seine Arbeitsposition geschlossen wird, bevor der Schaltkontakt (21) den Dampferzeuger aktiviert, wenn der Dampfauslaß (7) mit der Dampfeinlaßöffnung (28) der Milchaufschäumkanne (1) verbunden ist,
und so daß das Ventil (12) **durch** Verstellen des Betätigungshebels (19) aus der Arbeitsposition in die Ruheposition geöffnet wird, nachdem der Schaltkontakt (21) den Dampferzeuger abgeschaltet hat, bevor der Dampfauslaß (7) von der Dampfeinlaßöffnung (28) der Milchaufschäumkanne (1) getrennt ist.

2. Dampfandockeinheit nach Anspruch 1,
**dadurch gekennzeichnet,**
**daß** ein Dampfauslaßrohr als Dampfauslaß (7) Bestandteil eines in einer Zylinderhülse (8) absenkbaren und anhebbaren Dampfzuführzylinders (6) ist,
**daß** der Dampfzuführzylinder (6) mittels des Betätigungshebels (19) entgegen der Kraft einer Rückstellfeder (9) in seine Arbeitsposition absenkbar ist, in der er mit einer Ver-/Entriegelungseinrichtung (23-32) verriegelbar ist,
und **daß** die Ver-/Entriegelungseinrichtung (23-32), mit dem Betätigungshebel zum selbsttätigen Anheben des Dampfzuführzylinders (6) unter der Kraft der Rückstellfeder (9) in die Ruheposition entriegelbar ist, nachdem mit dem Betätigungshebel (19) der Schaltkontakt (21) betätigt ist, der damit die Dampferzeugung abschaltet,
und nachdem mit dem Betätigungshebel (19) das Ventil (12) zu der Dampfentspannungsleitung (18) geöffnet ist.

3. Dampfandockeinheit, nach den Ansprüchen 1 und 2,
**dadurch gekennzeichnet,**
**daß** die Ver-/Entriegelungseinrichtung (23-32) umfaßt:
einen Verriegelungszapfen (24), der in einem Verriegelungsiapfenaufnahmeloch (25) in dem Dampfzuführungszylinder (6) unter Druck einer Verriegelungszapfenfeder (26) steht, durch den er in einer Verriegelungszapfenfalle (27) in der Zylinderhülse (8) verschiebbar ist, sowie einen an der Zylinderhülse (8) gelagerten Entriegelungshebel (28), der in die Verriegelungsfalle (27) eingreift und der mittels des Betätigungshebels (19) schwenkbar ist, wobei er den Verriegelungszapfen (24) aus der Verriegelungszapfenfalle (27) drückt.

4. Dampfandockeinheit nach den Ansprüchen 1-3,
**dadurch gekennzeichnet,**
**daß** der Entriegelungshebel (28) eine Auflaufkurve (32) aufweist, auf der ein Mitnahmebolzen (23) des Betätigungshebels aufläuft, wenn dieser entlang des Entriegelungshebels geschwenkt wird, und daß sich der Mitnahmebolzen (23) in der Arbeitsposition des Betätigungshebels (19) im Abstand zu der Auflaufkurve (32) befindet.

5. Dampfandockeinheit nach mindestens einem der vorangehenden Ansprüche,
**dadurch gekennzeichnet,**
**daß** der Betätigungshebel (19) an einem Mitnahmeklotz (22) des Dampfzuführzylinders (6) anliegt.

6. Dampfandockeinheit nach den Ansprüchen 1 und 2,
**dadurch gekennzeichnet,**
**daß** als Ventil (12) ein drehbares Keramikventil vorgesehen ist, dessen Drehachse achsgleich mit einer Schwenkachse (1 9a) des Betätigungshebels (19) angeordnet ist.

7. Dampfandockeinheit nach einem der vorangehenden Ansprüche,
**dadurch gekennzeichnet,**
**daß** ein Betätigungselement des Schaltkontakts (21) in einer Bewegungsbahn des Betätigungshebels (19) angeordnet ist.

8. Dampfandockeinheit nach wenigstens den Ansprüchen 1 und 2,
**dadurch gekennzeichnet,**
**daß** das Dampfauslaßrohr an seinem Auslaßende von einer Dichtungsmanschette (33) umgeben ist, die beim Absenken des Dampfzuführzylinders (6) an die Milchaufschäumkanne (1) um deren Dampfeinlaßöffnung (2) wegabhängig zusammengedrückt wird.

## Claims

1. Coupling unit of an espresso machine which can be connected with a milk foaming can (1), said coupling unit comprising a steam inlet (10), a steam outlet (7) which can be pressed, by means of an actuation lever (19) movable from a rest position into a working position, against a steam inlet opening (2) of a milk foaming can (1), a valve (12) communicating with said steam inlet (10) and said steam outlet (7), which can be actuated by said actuation lever (19), and a switch contact (21) which can also be actuated by said actuation lever (19) and, in the working position of said actuation lever, activates a steam generator in the espresso machine,
**characterized by**
- a steam expansion duct (18) which, depending on the operation conditions, can be connected via said valve (12) with said steam inlet (10) and said steam outlet (7),
- and a control of said valve (12) by means of said actuation lever (19),
so that, when moving said actuation lever (19) from its rest position into its working position, said valve (12) is closed before said switch contact (21) activates the steam generator if said steam outlet (7) is connected with steam inlet opening (28) of said milk foaming can (1),
and so that, by moving said actuation lever (19) from the working position into the rest position, said valve (12) is opened after said switch contact (21) has switched off the steam generator before said steam outlet is removed from said steam inlet opening (28) of said milk foaming can (1).

2. Coupling unit according to claim 1,
**characterized in**
**that** a steam outlet tube constituting the steam outlet (7) is a component of a steam supply cylinder (6) lowerable and liftable within a cylinder sleeve (8),
**that** said steam supply cylinder (6) can be lowered by means of said actuation lever (19) contrary to the force of a resetting spring (9) into its working position in which it can be locked by locking/unlocking means (23 - 32),
and **that** said locking/unlocking means (23 - 32) can be unlocked under the force of said resetting spring (9) into the rest position by means of the actuation lever for automatic lifting of said steam supply cylinder (6) after said switch contact (21) has been actuated by said actuation lever (19) thus switching steam generation off,
and after said valve (12) has been opened by said actuation lever (19) to said steam expansion duct (18).

3. Coupling unit according to claims 1 and 2,
**characterized in**
**that** said locking/unlocking means (23 - 32) comprises:
a locking bolt (24) provided in a locking bolt receiving hole (25) in said steam supply cylinder (6) under the pressure of a locking bolt spring (26) by which it is movable within a locking bolt trap (27) in said cylinder sleeve (8), and an unlocking lever (28) supported on said cylinder sleeve (8), which engages into said locking trap (27) and which is tiltable by means of said actuation lever (19) pushing said locking bolt (24) out of said locking bolt trap (27).

4. Coupling unit according to claims 1 - 3,
**characterized in**
**that** said unlocking lever (28) has a lifting flank (32) onto which a carrier bolt (23) of said actuation lever runs up when it is moved along said unlocking lever, and that said carrier bolt (23) in the working position of said actuation lever (19) is located in spaced relationship to said lifting flank (32).

5. Coupling unit according to at least one of the foregoing claims,
**characterized in**
**that** said actuation lever (19) rests against a carrier block (22) of said steam supply cylinder (6).

6. Coupling unit according to claims 1 and 2,
**characterized in**
**that** as valve (12) a rotatable ceramic valve is provided the axis of rotation of which is disposed axially equal to a swivel axis (19a) of said actuation lever (19).

7. Coupling unit according to one of the foregoing claims,
**characterized in**
**that** an actuation element of said switch contact (21) is disposed in a path of motion of said actuation lever (19).

8. Coupling unit according to at least claims 1 and 2,
**characterized in**
**that** said steam outlet tube is surrounded at its outlet end by a gasket (33) which, when lowering said steam supply cylinder (6) onto said milk foaming can (1) around the steam inlet opening (2) thereof, is path-dependently compressed.

## Revendications

1. Ensemble accoupleur pour vapeur d'une machine à café express, qui peut être relié à un pot de moussage de lait (1), l'ensemble accoupleur pour vapeur comprenant une entrée de vapeur (10), une sortie de vapeur (7) qui peut être repoussée contre un orifice d'admission de vapeur (2) d'un pot de moussage de lait (1) au moyen d'un levier d'actionnement (19) pouvant être amené par pivotement d'une position de repos dans une position de travail, une vanne (12) qui est placée en communication avec l'entrée de vapeur (10) et la sortie de vapeur (7) et qui peut être actionnée par le levier d'actionnement (19), ainsi qu'un contact de commutation (21), qui peut lui aussi être actionné par le levier d'actionnement (19) et active, dans la position de travail du levier d'actionnement, un générateur de vapeur dans la machine à café express,
**caractérisé par**
- un conduit de détente de vapeur (18) qui, par l'intermédiaire de la vanne (12), peut être relié à l'entrée de vapeur (10) et à la sortie de vapeur (7) en fonction de l'état de fonctionnement,
- et une commande de la vanne (12) au moyen du levier d'actionnement (19),
de telle façon que la vanne (12) soit fermée lors du déplacement du levier d'actionnement (19) de sa position de repos dans sa position de travail, avant que le contact de commutation (21) active le générateur de vapeur, lorsque la sortie de vapeur (7) est reliée à l'orifice d'admission de vapeur (28) du pot de moussage de lait (1), et de telle façon que la vanne (12) soit ouverte par le déplacement du levier d'actionnement (19) de la position de travail dans la position de repos, après que le contact de commutation (21) a mis le générateur de vapeur à l'arrêt, avant que la sortie de vapeur (7) soit détachée de l'orifice d'admission de vapeur (28) du pot de moussage de lait (1).

2. Ensemble accoupleur pour vapeur selon la revendication 1,
**caractérisé**
**en ce qu'**un tube d'échappement de vapeur, constituant la sortie de vapeur (7), fait partie intégrante d'un cylindre d'amenée de vapeur (6) pouvant être abaissé et relevé dans un fourreau de cylindre (8),
**en ce que** le cylindre d'amenée de vapeur (6) peut, au moyen du levier d'actionnement (19), être abaissé, à l'encontre de la force d'un ressort de rappel (9), dans sa position de travail, dans laquelle il peut être verrouillé à l'aide d'un mécanisme de verrouillage/déverrouillage (23 à 32),
et **en ce que** le mécanisme de verrouillage/déverrouillage (23 à 32) peut être déverrouillé à l'aide du levier d'actionnement, en vue du relèvement automatique du cylindre d'amenée de vapeur (6) dans la position de repos, sous la force du ressort de rappel (9), après qu'a été actionné, à l'aide du levier d'actionnement (19), le contact de commutation (21), lequel coupe ainsi la génération de vapeur,
et après que la vanne (12) a été ouverte en direction du conduit de détente de vapeur (18) à l'aide du levier d'actionnement (19).

3. Ensemble accoupleur pour vapeur selon les revendications 1 et 2,
**caractérisé**
**en ce que** le mécanisme de verrouillage/déverrouillage (23 à 32) comprend :
un ergot de verrouillage (24) qui se tient dans un trou de réception d'ergot de verrouillage (25) ménagé dans le cylindre d'amenée de vapeur (6) en comprimant un ressort d'ergot de verrouillage (26), par lequel il peut être translaté dans un piège à ergot de verrouillage (27) ménagé dans le fourreau de cylindre (8),
ainsi qu'un levier de déverrouillage (28) monté sur le fourreau de cylindre (8), lequel levier de déverrouillage s'engage dans le piège de verrouillage (27) et peut pivoter sous l'action du levier d'actionnement (19), auquel cas il expulse l'ergot de verrouillage (24) du piège à ergot de verrouillage (27).

4. Ensemble accoupleur pour vapeur selon les revendications 1 à 3,
**caractérisé**
**en ce que** le levier de déverrouillage (28) présente une came d'attaque (32), sur laquelle un doigt entraîneur (23) du levier d'actionnement s'applique, lorsque celui-ci est déplacé par pivotement le long du levier de déverrouillage, et en ce que le doigt entraîneur (23) se trouve à distance de la came d'attaque (32) dans la position de travail du levier d'actionnement (19).

5. Ensemble accoupleur pour vapeur selon l'une au moins des revendications précédentes,
**caractérisé**
**en ce que** le levier d'actionnement (19) prend appui sur un plot entraîneur (22) du cylindre d'amenée de vapeur (6).

6. Ensemble accoupleur pour vapeur selon les revendications 1 et 2,
**caractérisé**
**en ce qu'**il est prévu comme vanne (12), une vanne rotative en céramique, dont l'axe de rotation est positionné coaxialement à un axe de pivotement (19a) du levier d'actionnement (19).

7. Ensemble accoupleur pour vapeur selon l'une des revendications précédentes,
**caractérisé**
**en ce qu'**un élément d'actionnement du contact de commutation (21) est disposé dans une trajectoire de déplacement du levier d'actionnement (19).

8. Ensemble accoupleur pour vapeur selon au moins les revendications 1 et 2,
**caractérisé**
**en ce que** le tube d'échappement de vapeur est entouré, à son extrémité de sortie, par un soufflet d'étanchéité (33) qui, lors de l'abaissement du cylindre d'amenée de vapeur (6) est, en fonction de sa course, comprimé contre le pot de moussage de lait (1), autour de son orifice d'admission de vapeur (2).
